# EUROPÄISCHE PATENTANMELDUNG

(11) **EP 0 575 834 A1**
(43) Veröffentlichungstag der Anmeldung: **29.12.1993**
(21) Anmeldenummer: 93109357.9
(22) Anmeldetag: 11.06.1993
(51) Int. Cl.: B29C 65/00, B29C 65/50

(54) **Verfahren zur Herstellung von Dichtungsplanen aus einer elastomeren Plane und einem elastomeren Profilstreifen**

(30) Priorität: 24.06.1992 DE 4220627
(71) Anmelder: Saar-Gummiwerk GmbH, D-66687 Wadern (DE)
(72) Erfinder: Leber, Wolfgang, D-6648 Wadern (DE)

(57) **Zusammenfassung**

Bei einem Verfahren zur Herstellung von Dichtungsstreifen aus einem elastomeren Band und an zumindest einer Längsseite des Bandes angebrachten elastomeren Profilstreifen weist der Profilstreifen eine ebene Grundfläche auf, die mit dem Randbereich des Bandes verbunden wird. Zur Herstellung der Verbindung wird die Grundfläche oder der Randbereich des Bandes mit einem durch Erwärmung aktivierbaren Schweißband belegt und diese durch Erwärmung miteinander verschweißt.

## Beschreibung

Die Erfindung betrifft ein Verfahren zur Herstellung von Dichtungsplanen aus einer elastomeren Plane und an zumindest einer Längsseite der Plane aufgebrachten elastomeren Profilstreifen.

Solche Dichtungsplanen sind zum Abdichten von Spalten und Fugen zwischen einem Baukörper und Bauelementen, z.B. im Fenster- und Fassadenbau bekannt, wobei der Profilstreifen zur Verankerung der Dichtungsbahn in einer Haltenut dient.

Bei den bekannten Dichtungsplanen erfolgt die Verbindung des Profilstreifens mit der Plane oder einem Band durch Vulkanisation durch Erhitzung und unter Druck im sog. Hotbonding-Verfahren. Um den Druck aufbringen zu können, müssen eigens für diesen Einsatzfall herzustellende Profilstreifen mit seitlich angeformter Verbindungslippe verwendet werden, wobei zur Erreichung einer ausreichenden Festigkeit der Verbindung die Lippenbreite wesentlich größer als die eigentliche Profilseite sein muß. Dadurch muß für jede, z.B. durch die Geometrie der Haltenut im Bauelement vorgegebene Profilgeometrie ein entsprechender Profilstreifen vorgehalten werden, was eine erhöhte Lagerhaltung bedeutet.

Aufgabe der vorliegenden Erfindung ist es, ein verbessertes wirtschaftliches Verfahren zur Herstellung von Dichtungsplanen der eingangs genannten Art anzugeben.

Diese Aufgabe wird erfindungsgemäß dadurch gelöst, daß der Profilstreifen eine ebene Grundfläche aufweist und diese mit dem Randbereich der Plane verbunden wird, daß zur Herstellung der Verbindung die Grundfläche oder der Randbereich des Bandes mit einem durch Erwärmung aktivierbaren Schweißband belegt und durch Erwärmung miteinander verschweißt werden.

Bei diesem Verfahren entfällt die Verbindungslipe. Übliche Dicht- bzw. Halteprofile können unmittelbar auch zur Herstellung von Dichtungsbahnen bzw. Dichtungsstreifen verwendet werden. Eine notwendige Anpassung an vorgegebene Nutgeometrien erfordert in der Regel nicht mehr die Anfertigung eines entsprechenden Profilstreifens, da Dicht- und Halteprofile in einer großen Geometrien-Vielfalt verfügbar sind. Die Lagerhaltungskosten können so wesentlich gesenkt werden.

Das erfindungsgemäße Verfahren erlaubt es darüber hinaus, die Verbindung von Profilstreifen und Plane in einem kontinuierlich ablaufenden Arbeitsgang herzustellen, so daß auch geringere Fertigungskosten anfallen.

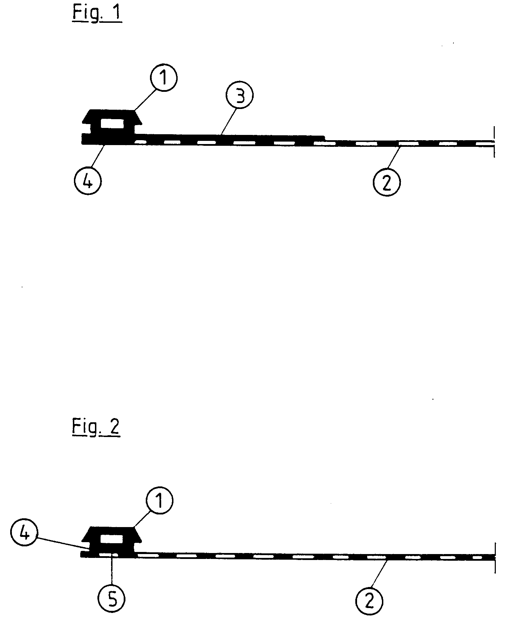

In Figur 1 ist eine nach dem bekannten Verfahren hergestellte Dichtungsplane dargestellt. Der Profilstreifen 1 weist eine angeformte Verbindungslippe 3 auf, deren Wanddicke gegenüber der Profilgrundfläche entsprechend der Dicke der Plane 2 reduziert ist und mit dieser durch Vulkanisation unter Druck und Erhitzung verbunden ist.

Figur 2 zeigt eine nach dem erfindungsgemäßen Verfahren hergestellte Dichtungsplane unter Verwendung eines üblichen Profilstreifen 1, der unmittelbar mit seiner ebenen Grundfläche 4 durch Aktivierung des zwischengelegten Schweißbandes aus thermoelastischem Polymer und/oder Copolymer 5 verschweißt ist.

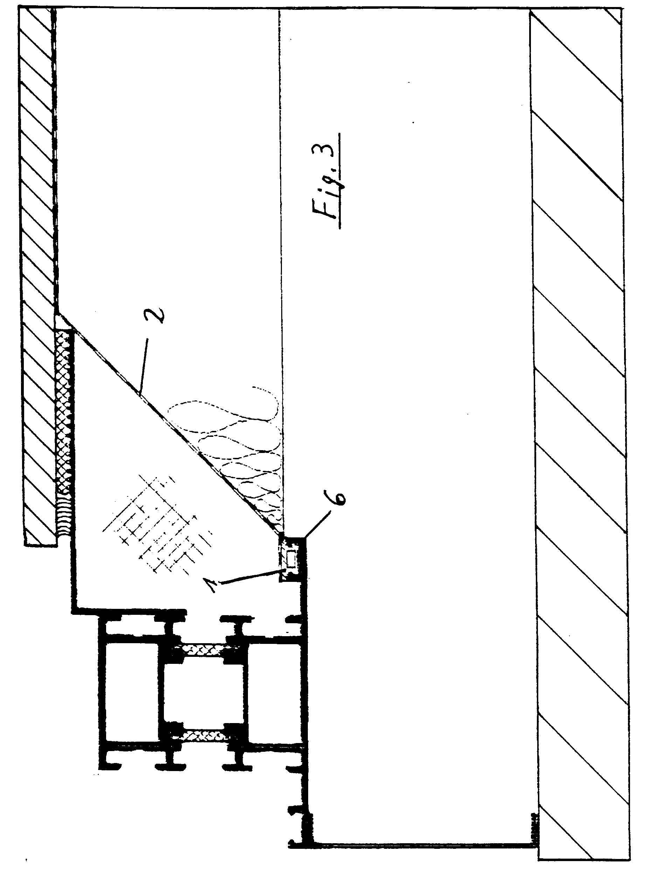

Figur 3 zeigt beispielhaft den Einbau einer Dichtungsplane an einem Bauwerk, wobei die Dichtungsplane mit dem angeschweißten Profilstreifen 1 in einer Nut 6 eines Profilrahmens gehalten ist.

## Patentansprüche

1. Verfahren zur Herstellung von Dichtungsstreifen aus einem elastomeren Band und an zumindest einer Längsseite des Bandes angebrachtem elastomeren Profilstreifen, dadurch gekennzeichnet, daß der Profilstreifen eine ebene Grundfläche aufweist und diese mit dem Randbereich des Bandes verbunden wird, daß zur Herstellung der Verbindung die Grundfläche oder der Randbereich des Bandes mit einem durch Erwärmung aktivierbaren Schweißband belegt und durch Erwärmung miteinander verschweißt werden.

2. Verfahren nach Anspruch 1, dadurch gekennzeichnet, daß das Schweißband aus thermoelastischem Polymer oder Copolymer besteht.
